# EUROPEAN PATENT SPECIFICATION

(11) **EP 3 333 860 B1**
(45) Date of publication and mention of the grant of the patent: **18.11.2020**
(21) Application number: 18152939.7
(22) Date of filing: 04.03.2016
(51) Int. Cl.: H01F 3/10, H01F 3/08, H01F 27/02, H01F 27/26, H01Q 7/08, H01Q 1/32, B60R 25/24, G07C 9/00

(54) **MAGNETIC CORE ASSEMBLY FOR A FLEXIBLE ELONGATED INDUCTOR AND FLEXIBLE ELONGATED INDUCTOR**
MAGNETKERNANORDNUNG FÜR EINEN FLEXIBLEN LANGGESTRECKTEN INDUKTOR UND FLEXIBLER LANGGESTRECKTER INDUKTOR
ENSEMBLE DE NOYAU MAGNÉTIQUE POUR UN INDUCTEUR ALLONGÉ FLEXIBLE ET INDUCTEUR ALLONGÉ FLEXIBLE

(43) Date of publication of application: 13.06.2018
(62) Divisional of application: 16380004.8
(73) Proprietor: Premo, S.A., 29590 Campanillas Málaga (ES)
(72) Inventor: ROJAS CUEVAS, Antonio, Málaga 29190 (ES); NAVARRO PÉREZ, Francisco Ezequiel, Barcelona 08011 (ES); CAÑETE CABEZA, Claudio, BENALMADENA 29631 (ES)
(74) Representative: Juncosa Miró, Jaime

(56) References cited:
- CN-A- 85 106 221
- GB-A- 2 025 150
- US-A1- 2002 122 011
- US-A1- 2015 123 761
- US-B2- 7 138 896

## Description

### Technical field

The present invention is comprised in the field of keyless door opening or entry systems, of application in the automobile sector, in which they are also applied to controlling the electronic immobilizer for starting the engine. This "keyless" system (KES or Keyless Entry System or also referred to as PKE - Passive Keyless Entry) is based on the use of a remote control or device emitting wireless signals and on the arrangement in the vehicle itself of 3 or more antennas the function of which is to detect the presence (capturing the mentioned wireless signals), in a perimeter of about 1.5 m or more surrounding the vehicle, of the mentioned remote control device carried by a user. Based on said detection, the door is opened or locked and options of switching the engine on and off, comfort adjustments of the rear-view mirrors, motorized seats, switching the courtesy light on, are also enabled among other possible functions.

The invention provides a magnetic core assembly for a flexible elongated inductor according to present claim 1 and a flexible elongated inductor according to present claim 6. It is usable for a keyless entry system with a single antenna.

An elongated and flexible low-frequency antenna is easily obtained from the mentioned flexible inductor by providing electronic elements and eventually connection elements for connecting internally or externally to a capacitor to configure a resonant tank.

### Background

Engineers and technologist have been seeking for a keyless opening system with a single antenna for years. Many systems have been described in theory, but all of them lack the actual possibility of providing an antenna that overcomes the problem of fragile ferrite magnetic cores.

Keyless entry systems for the automotive industry often work at low frequencies, such as for example, at 20 KHz such as those described in MARQUARDT's patent documents EP-B1-1723615 and WO-A1-2013135381, or at 125 KHz and 134 KHz such as those described in CONTI's patent documents WO-A1-2011120501 or US-B2-9184506.

In order to cover a minimum reading distance (capture the wireless signal of the remote-control device) from the vehicle, the existing systems usually use short ferrite antennas arranged in the door handles and trunk. These antennas normally use cores made of soft ferrite magnetic material, ZnMn. Since ferrite is a brittle and fragile material, the maximum length of the antennas is limited to a length in which the ferrite can withstand a minimum torque or deformation. This limits the actual length of ferrite cores used to less than 180 mm and typically from 80 to 120 mm. These extremely fragile cores receive a coil which is protected by overmolding or by plastic casings and the antennas made of resulting wire coil are in general embedded in a resin or already overmolded with low pressure or by high pressure polymers.

All these plastic coatings and layers are intended for protecting the fragile ferrite core from external forces, torques, blows and bends.

PREMO's patent application PCT/IB2015/001238 describes flexible magnetic cores and processes for production thereof, based on microwires made from high-permeability soft magnetic alloys and polymer nanoparticles dispersed in a polymer matrix surrounding said microwires.

With continuous ferrite cores, the length of the antennas is limited and the systems of the state of the art describe arrangements with 3 to 5 antennas per vehicle in order to cover a minimum reading distance around the entire vehicle.

Meanwhile, the current antennas used in vehicles generally have a length less than 180 mm, the replacement thereof with a single antenna would require a length between 300 mm and 500 mm in order to generate a magnetic field having enough intensity to cover those generated by the current short antennas. However, an antenna so long cannot use a single solid ferrite core because in said case it would break easily with a very small bending force even if it is coated, molded or overmolded by means of a casing or surrounded by a hard-plastic casing.

A possibility for solving the mentioned technical problem would be a "keyless" system that uses an elongated, completely flexible, low-frequency LF antenna, such as that provided in PREMO's patent application PCT/IB2015/001238.

This innovation would allow implementing a "KES" system that would provide, with a single antenna, performances equal to or greater than those provided by the systems of the state of the art with 3, 4 or 5 antennas. The innovation leads to a "KES" system having many technical and economic advantages:
- The wiring and connectors are reduced by 1/3, 1/5 or ¼, respectively.
- OEM assembly time is reduced by 1/3, 1/5 or ¼, respectively.
- The total energy consumption and actual battery losses, a very important parameter particularly in electric vehicles, are proportionally reduced.
- A longer antenna requires lower currents to generate equal or more intense magnetic fields, thereby reducing the necessary energy and allowing reducing the cross section of the wire in the antennas' coil.

A reduction of the electrical output necessary in the vehicle is achieved with the foregoing; MOSFET transistors which allow reducing the number of amplifiers and the characteristics of the power stage by 1/3, 1/4 or 1/5 and furthermore allow simplifying the final analog power elements necessary which may be simpler and less expensive due to the fact that a lower current is being used for generating the same magnetic fields than the systems of the art. In general, the Front-End or analog interface of the reader in the electronic control unit (ECU) is simplified both by reduction of the channels that would go from 5, 4 or 3 to 1 and by an important reduction of the power of the remaining channel.

The reliability of a vehicle is proportional to the number of components it incorporates so the mere reduction of the number of antennas and channels in the ECU provides intrinsic reliability increasing the mean time between system failures or MTBF.

Likewise, by using a single antenna the safety elements thereof are simplified.

An elongated inductor comprising multiple ferrite cores has been widely used for AM radio systems. Patent application WO-A2-2009123432 describes a solution consisting of multiple cores of cylindrical rods inside a coil. A more recent application in wireless charging systems was presented by Qualcom in patent application US-A1-2013249303 disclosing a plurality of aligned ferromagnetic elements.

SUMIDA's patent application US-A1-20150295315 describes rigid, solid ferrite cores that are introduced in a coil forming machine with a specific shape for arranging capacitors and waveguides.

Said PREMO's patent application PCT/IB2015/001238 describes various materials other than ferrite such as nanocrystalline sheets but they have not been used in practice because said materials have a very significant drawback, the magnetostriction, a property of soft magnetic materials causing great changes in magnetic permeability under pressure or deformation. Therefore, while these sheet materials, although being very expensive, could theoretically be used in long antennas, in practice these antennas do not break, but change their permeability so much that the resonance frequency typical of the tuned tanks that they form in series or capacitors in parallel lack the minimum selectiveness required for a reliable system. On the other hand, the deformation of the sheets is only possible in the axis perpendicular to the wide side, while in the other two orthogonal axes the cores are non-deformable.

PREMO's patent application PCT/IB2015/001238 of PREMO provides an elongated antenna that can be bent in a three-dimensional space both along an X-axis and along an orthogonal Y-axis.

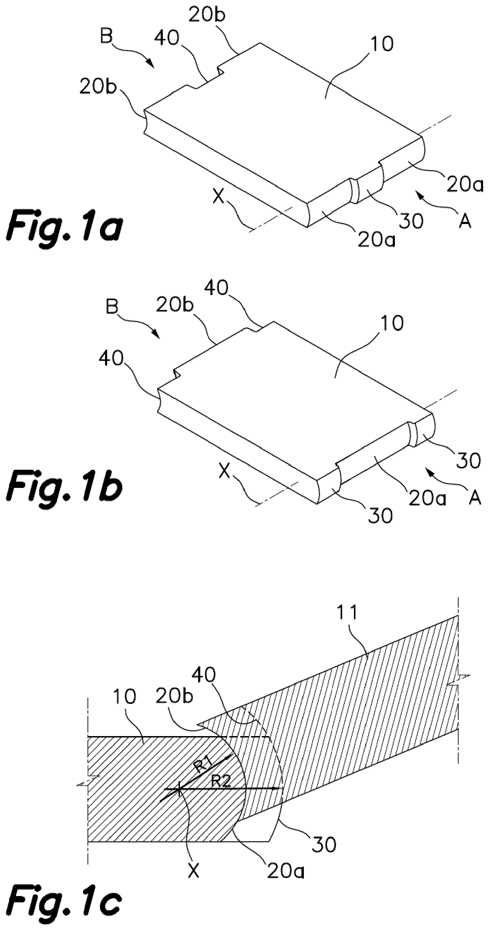

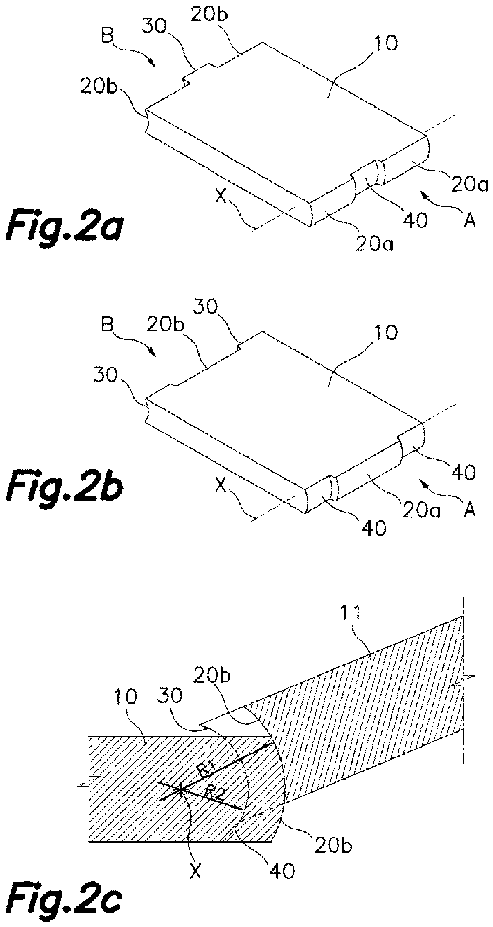

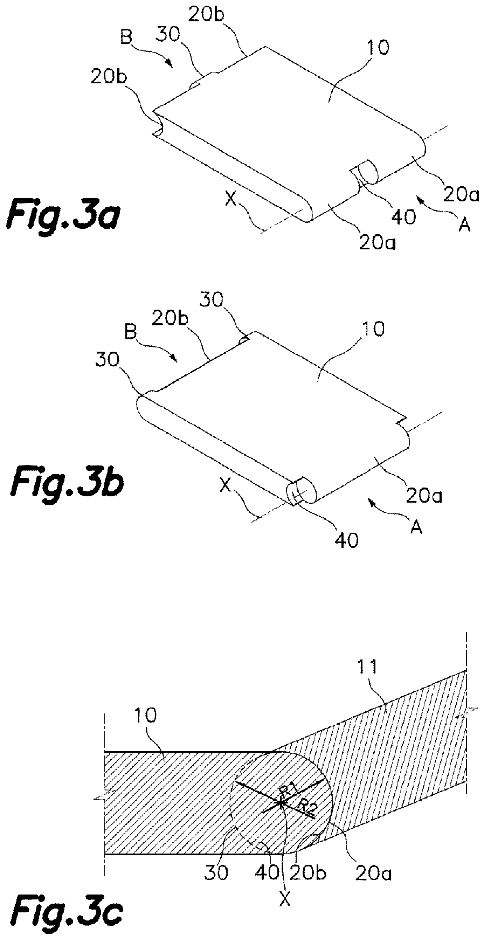

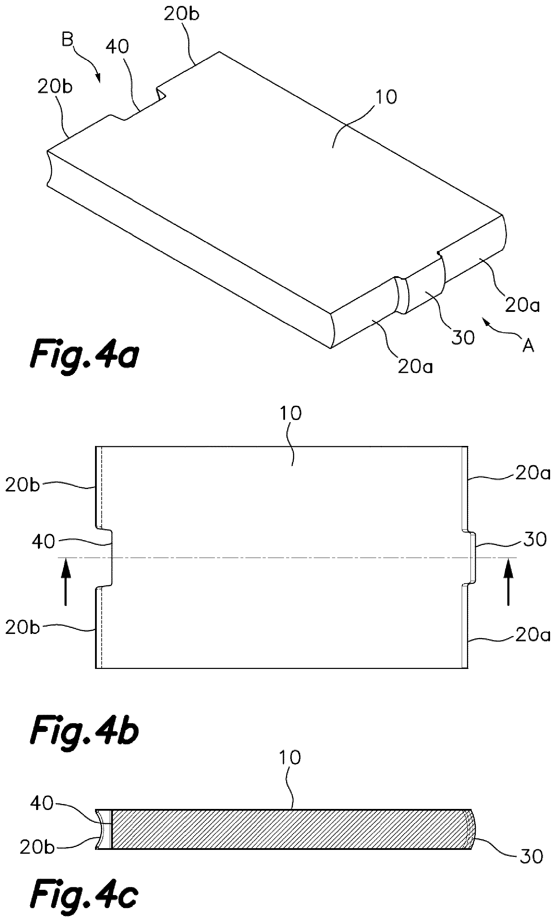

Another solution is described in SUMIDA's patent application US-A1-2015123761 based on a composite core made of a plurality of cylindrical or rectangular prismatic ferrite cores (see Figures 1-4, 7, 8) with a circular convex curved and a circular concave curved termination at the head and tail ends thereof, which are coupled to one another in an articulated manner.

The construction of elongated cores by means of adding longitudinally smaller elements coupled to one another is already disclosed in patent document US-A1-2015123761.

Other documents disclosing composite inductors include patent documents US-B1-6417665 describing a long magnetometer with a flexible magnetic core, made up of several cores coupled to one another and EP-A2-0848577 describing the construction of a long and flexible magnetic core made of ferrite rods coupled at their ends. Furthermore, coupling at the ends of magnetic cores by means of physical interstices or separations between the spherical or cylindrical contacting surfaces (gap) is a common practice in magnetic rotating machines because they are required for assuring a constant and minimum gap, as well as for free movement. See, for example, the 1974 publication by Bruce De Palma "The generation of a unidirectional Force" (http//depalma.pair.com/GenerationOfUnidirectionalForce.html).

In hard magnetic materials, it is also common practice for moving magnetic parts to use spherical interstices (gaps) in combination with ferrofluids for advanced bearings.

Patent document US7138896 describes ferrite cores made of individual elements coupled to one another in a head-tail-head manner by means of a cylindrical gap for EMI (electromagnetic interference) shielding in flat cables operating as an antenna radiating energy in the form of electromagnetic radiation.

The present invention prevents problems in the physical implementation of inductors with a plurality of magnetic cores coupled to one another and affecting their performance when they are applied for constructing an LF antenna for a KES system, as a result of the parasitic vertical and horizontal gaps, in particular:
- The discrete cylindrical elements or spherical core elements do not have an adhesive attachment at their contacting articulation ends, and there is no way to assure that the gap, which is demarcated by the distance of air or non-ferromagnetic material between core elements, does not become larger when an elongation occurs in direction X. Therefore, when an elongation occurs in direction X, the distance between the elements increases so the loss of magnetic flux increases, resulting in an increase in magnetic reluctance as a result of a lower permeability, causing a deviation of the resonance frequency and antenna malfunction.
- The discrete elements of the core that is cylindrical or having a rectangular cross section can slide with respect to one another, without any retention element between them, thereby causing a horizontal separation generating a misalignment of the magnetic cores coupled to one another increasing the total reluctance in the manner proportional to the number of elements. This horizontal separation or interstice reduces the constant cross section area available intersected by the lines of magnetic field, thereby resulting in a reduction of the effective permeability. On the other hand, the magnetic leakage flux lost in the gap is not redirected by a low reluctance magnetic path, losing the induction capacity in the coil.

Both effects, i.e., misalignment in the direction of the Y-axis and the enlargement of the gap in the direction of the X-axis of a three-dimensional space determine an inefficient performance of the mentioned composite inductors.

The present invention proposes a solution to the mentioned problems and allows constructing a flexible antenna having a length greater than 300 mm.

### Brief Description of the Invention

The invention provides a magnetic core assembly according to present claim 1.

In addition, said assembly of said two or more rigid magnetic cores can be surrounded by a flexible polymer casing, including ferromagnetic charges that work together to prevent magnetic flux dispersion in the coupling areas or interstices (gaps) between said magnetic cores, thereby providing a flexible elongated inductor.

The flexible elongated inductor can be used for a keyless opening system for automobiles based on a single, elongated and flexible or semi-flexible LF antenna (primarily from 20 KHz to 300 KHz).

In one embodiment, the mentioned flexible polymer casing includes microfibers, microparticles and/or nanoparticles of a soft ferromagnetic material present alone or in any combination thereof inside the polymer matrix of said polymer casing.

Furthermore, the mentioned microfibers, microparticles and/or nanoparticles of a soft ferromagnetic material represent about at least 50% of the total weight of the polymer casing.

According to a preferred embodiment of the invention, each of the magnetic cores connected in an articulated manner has a rectangular prismatic configuration, said retention projection and recess being defined on respective opposing, smaller rectangular faces of both ends A and B of the magnetic core.

By means of such coupling arrangement between the magnetic cores, a flexible elongated inductor having a length greater than 15 cm and preferably greater than 30 cm and with a maximum length of about 60 cm (sufficient length for the applications of a KES system, as described, although greater inductor lengths would be perfectly attainable, operating perfectly and with minimum magnetic flux losses.

An elongated flexible antenna may be formed by the flexible inductor.

Other preferred features of the invention are described in the following detailed description of an embodiment.

### Brief Description of the Drawings

The foregoing and other advantages and features will be better understood based on the following detailed description of an embodiment in reference to the attached drawings which must be interpreted in an illustrative and non-limiting manner, in which:
Figure 1a shows a magnetic core of a first embodiment of a magnetic core assembly according to the invention and Figure 2a shows a second embodiment that differ in the arrangement of the retention recess or projection and of the corresponding contact coupling surfaces for linking with other inductors to form a flexible elongated inductor, as described above.
Figure 1c shows detailed section view of the coupling between the cores corresponding to the embodiment of Figure 1a.
Figures 2a and 2b show two embodiments for a magnetic core assembly according to the invention which are equivalent to those illustrated in Figures 1a and 1b, although the arrangement of the projection and recess is the other way around.
Figure 2c shows the section view of the coupling between two magnetic cores according to Figure 2b.
Figures 3a and 3b show two other magnetic cores of two other embodiments of a magnetic core assembly of the invention. Figure 3c is a section view of a coupling between the cores having a configuration according to Figure 3b.
Figures 4a and 4b show another embodiment of a magnetic core assembly according to the principles of the invention and Figure 4c illustrates the element sectioned through the plane of section illustrated in Figure 4b.
Figures 5a and 5b illustrate yet a core of another embodiment of a magnetic core assembly according to the invention, Figure 5c illustrating a cross section of the said magnetic core according to the plane of section indicated in Figure 5b.
Figures 6a and 6b indicate an example of an elongated magnetic inductor formed by the coupling of seven magnetic cores, the assembly being surrounded by a flexible polymer casing, including magnetic charges that work together to prevent magnetic flux dispersion in the coupling areas or interstices (gaps) between said magnetic cores. An elongated flexible antenna will be obtained from the flexible inductor of said Figures 6a and 6b, a conductive wire or a conductive sheet suitably coiled around the body thereof.
Figure 7 shows a perspective view of a possible embodiment of such LF antenna.

### Detailed Description of Several Embodiments

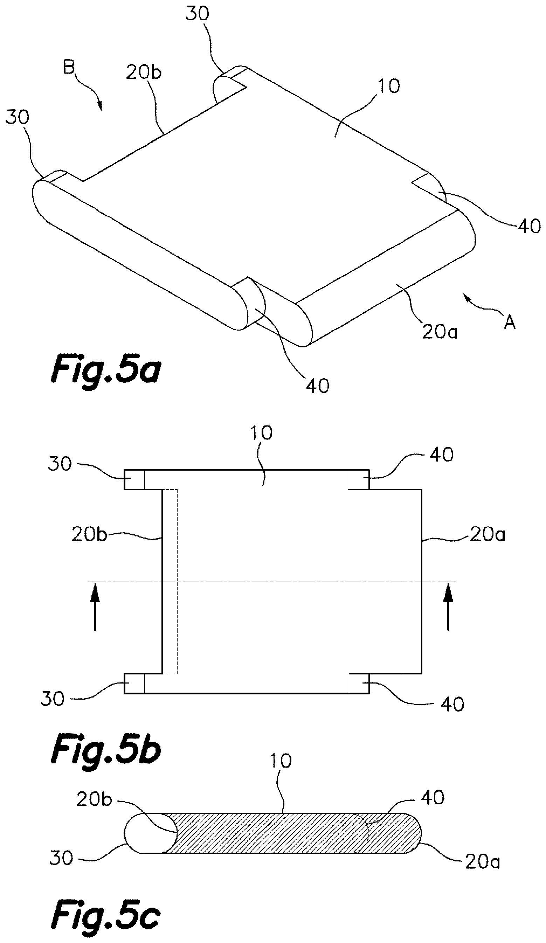

According to the different embodiments of the invention of Figures 1a to 5c, a magnetic core assembly for a flexible elongated inductor is formed by a plurality of rigid magnetic cores 10, 11, made from ferromagnetic material, connected in an articulated manner to one another at their ends, forming an oblong assembly, already known in the state of the art, as referred to therein and wherein each of the magnetic cores 10, 11 comprises:
- a head end A provided with a circular convex curved surface in relation to a transverse axis X of the head; and
- a tail end B provided with a circular concave curved surface, in relation to a transverse axis X of the tail, parallel to the transverse axis X of the head, and being said circular concave curved surface complementary to said circular convex curved surface.

Said articulated connection or coupling between the magnetic cores is performed such that the head end A of a magnetic core is coupled, through contact surfaces 20a, 20b, to the tail end B of an adjacent magnetic core, forming an articulated attachment around the mentioned transverse axis and the transverse axes of the head and tail of the two magnetic cores coupled to one another 10, 11 coinciding in the coupling area (see, in particular, drawings in section view) providing a joint having a variable, adjustable angle.

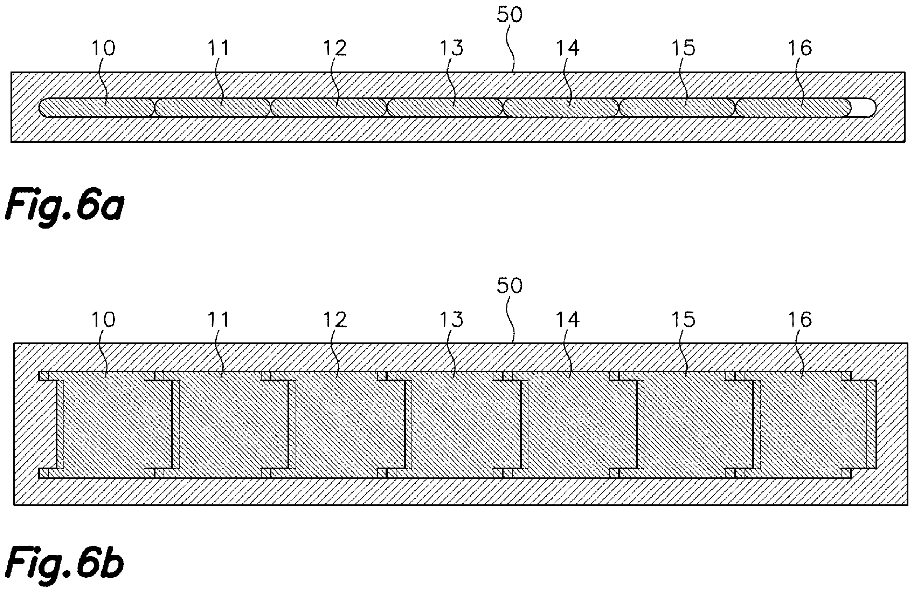

As clearly illustrated in Figures 6a and 6b, the flexible elongated inductor according to an embodiment of the invention is characterized in that the assembly of said rigid magnetic cores 11, 12, 13, 14, 15, 16 (six in this embodiment) is surrounded by a flexible polymer casing 50 including magnetic charges that work together to prevent magnetic flux dispersion in the coupling areas or interstices (gaps) between said plurality of magnetic cores 10, 11 coupled to one another.

As indicated, the mentioned flexible polymer casing includes in a preferred embodiment microfibers, microparticles and/or nanoparticles of a soft ferromagnetic material present alone or in any combination thereof inside the polymer matrix of said polymer casing. Likewise, the mentioned microfibers, microparticles and/or nanoparticles of a soft ferromagnetic material can represent about at least 50% of the total weight of the core. Such casing assures that there are no magnetic flux losses in the joint areas or contact surfaces 20a, 20b of the magnetic cores.

The mentioned drawings illustrate preferred embodiments wherein each of the magnetic cores 10, 11, 12, 13, 14, 15, 16 coupled to one another or connected in an articulated manner has a rectangular cross section, such that they form a flat, flexible elongated inductor.

A second relevant feature of the invention lies in the fact that said articulated attachment of the magnetic cores 10, 11 includes at least one transverse retention configuration formed by a projection 30 and a recess 40 complementary to one another, defined in said head end A and tail end B, respectively, and formed from said ferromagnetic material of the mentioned magnetic cores, preventing said retention configuration from being misaligned in a transverse direction of the magnetic cores 10, 11 coupled to one another.

The features relating to the explained setting-up and arrangement of the coupling between the magnetic cores allow obtaining a flexible elongated inductor with a length greater than 15 cm and preferably greater than 30 cm.

To use the flexible elongated inductor as an antenna (with a coil around its elongated section), it is considered that a maximum length of about 60 cm is sufficient, although the principles of the invention must not be understood as being limited to said maximum value, considered as sufficient for the desired functionality and performances in the automobile field.

The proposed magnetic core has a rectangular prismatic configuration, said projection 30 and recess 40 being defined on respective opposing, smaller rectangular faces of both ends A and B of the magnetic core 10, 11. In the different embodiments, the differences lies in where said projection 30 and recess 40 and the corresponding contact surfaces 20a and 20b between the different magnetic cores have been configured.

Particularly, solutions have been shown wherein the projection 30 and the projection 40, in retention and anti-sliding functions, adopt a central position in relation to the assembly of rigid magnetic cores 10, 11 coupled to one another at their ends A and B, whereas in other examples said projection 30 and said projection 40 adopt a side position in relation to the assembly of rigid magnetic cores 10, 11 coupled to one another at their ends A and B.

In embodiments suitable for the described functionality, it has been envisaged that said projection 30 and said projection 40 have a span with a width of 10% in relation to the largest width of the rectangular prismatic configuration, or a width of a 60% in relation to the largest width of the rectangular prismatic configuration.

In the embodiment of Figures 6a and 6b, the inductor includes seven magnetic cores coupled to one another and a total extension determining that, when held by one end, the free end will bend a maximum of 2 cm for a length of 30 cm.

As indicated, a flexible LF antenna will be obtained by means of a suitable coil of a conductive metal wire 51 (or alternatively of a conductive foil) arranged around an elongated flexible inductor such as those described.

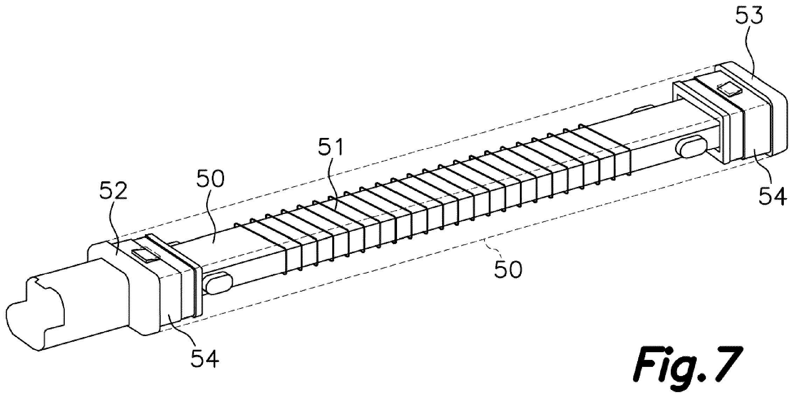

Figure 7 depicts a possible embodiment of an LF antenna using the proposed flexible inductor in which there can be seen the polymer casing 50 and the coil 51 forming the mentioned flexible inductor, boxes made, for example, of a PBT thermoplastic polymer, front part 52 integrating a connector and terminals and rear part 53 and closure gaskets 54, said boxes 52, 53 being attached through a tube 55 likewise made of a PBT plastic, providing a suitable flexibility.

## Claims

1. A magnetic core assembly for a flexible elongated inductor, the assembly being formed by at least two rigid magnetic cores (10, 11) made from ferromagnetic material, connected in an articulated manner to one another at their ends, forming an oblong assembly, wherein each of the magnetic cores (10, 11) has a rectangular cross section seen in the oblong direction, and comprises:
- a head end (A) provided with a circular convex curved surface in relation to a transverse axis (X) of the head; and
- a tail end (B) provided with a circular concave curved surface in relation to a transverse axis (X) of the tail, parallel to the transverse axis (X) of the head, said circular concave curved surface being a circular concave curved surface complementary to said circular convex curved surface,
wherein the head end (A) of one of the magnetic cores is coupled with the tail end (B) of an adjacent one of the magnetic cores through contact surfaces (20a, 20b) provided by the circular convex curved surface and the circular concave curved surface, forming an articulated attachment around the mentioned transverse axes (X) of the head and tail, which coincide in the coupling area, providing a joint having a variable, adjustable angle,
wherein the magnetic core assembly of said two or more rigid magnetic cores (10, 11) has a coil (51) made from a conductive element surrounding said cores, and said articulated attachment between the magnetic cores (10, 11) includes at least one retention configuration formed by a projection (30) and a recess (40) complementary to one another, defined in said head end (A) and tail end (B) respectively, the projection (30) protruding from one of the contact surfaces (20a or 20b) and the recess (40) being recessed from an opposing one of the contact surfaces (20b or 20a), and formed from said ferromagnetic material of the mentioned magnetic cores, preventing said retention configuration from being misaligned in a transverse direction of the magnetic cores (10, 11) coupled to one another.

2. The magnetic core assembly according to claim 1, wherein each of said magnetic cores has a rectangular prismatic configuration and said projection (30) and recess (40) are defined on respective opposing, smaller rectangular faces of both ends (A, B) of each magnetic core (10, 11).

3. The magnetic core assembly according to claim 2, wherein said projection (30) and said recess (40) adopt a central position in relation to the assembly of the rigid magnetic cores (10, 11) coupled to one another at their ends (A, B).

4. The magnetic core assembly according to claim 2, wherein said projection (30) and said recess (40) adopt a side position in relation to the assembly of the rigid magnetic cores (10, 11) coupled to one another at their ends (A, B).

5. The magnetic core assembly according to claim 2, wherein said projection (30) and said recess (40) have a width of 10% in relation to the largest width of the rectangular prismatic configuration or have a width of 60% in relation to the largest width of the rectangular prismatic configuration.

6. A flexible elongated inductor including a magnetic core assembly according to any of claims 1 to 5 surrounded by a flexible polymer casing (50).

7. The flexible elongated inductor according to claim 6 wherein the flexible polymer casing (50) includes microfibers, microparticles and/or nanoparticles of a soft ferromagnetic material present alone or in any combination thereof inside the polymer matrix of said polymer casing that work together to prevent magnetic flux dispersion in the coupling areas or interstices between said at least two magnetic cores (10, 11).

8. The flexible elongated inductor according to claim 7, wherein said microfibers, microparticles and/or nanoparticles of the soft ferromagnetic material represent about at least 50% of the total weight of the core.

9. The flexible elongated inductor according to claim 6 or 7 wherein the flexible elongated inductor has a length greater than 15 cm and preferably greater than 30 cm.

## Patentansprüche

1. Magnetkernanordnung für einen flexiblen langgestreckten Induktor, wobei die Anordnung aus mindestens Folgendem besteht:
zwei starren Magnetkernen (10, 11) aus ferromagnetischem Material, die an ihren Enden gelenkig miteinander verbunden sind und eine längliche Anordnung bilden, wobei jeder der Magnetkerne (10, 11) in Längsrichtung gesehen einen rechteckigen Querschnitt aufweist und umfasst:
- ein vorderes Ende (A) mit einer kreisförmig konvex gebogenen Fläche relativ zur Querachse (X) des vorderen Endes; und
- ein hinteres Ende (B) mit einer kreisförmig konkav gebogenen Fläche relativ zur Querachse (X) des hinteren Endes und parallel zur Querachse (X) des vorderen Endes, wobei die genannte kreisförmig konkav gebogene Fläche eine zu der genannten kreisförmig konvex gebogenen Fläche komplementäre kreisförmig konkav gebogene Fläche ist,
wobei das vordere Ende (A) eines der Magnetkerne über die durch die kreisförmig konvex gebogene Fläche und die kreisförmig konkav gebogene Fläche gebildeten Kontaktflächen (20a, 20b) mit dem hinteren Ende (B) eines benachbarten Magnetkerns verbunden ist, wodurch eine gelenkige Befestigung um die im Verbindungsbereich zusammenfallenden erwähnten Querachsen (X) des vorderen Endes und des hinteren Endes gebildet wird, wodurch eine Verbindung mit verstellbarem, variablem Winkel entsteht,
wobei die Magnetkernanordnung der genannten zwei oder mehr starren Magnetkerne (10, 11) eine die genannten Kerne umgebende Spule (51) aus einem leitenden Element aufweist und die genannte gelenkige Befestigung zwischen den Magnetkernen (10, 11) mindestens eine Arretierungsanordnung bestehend aus einem Fortsatz (30) und einer Aussparung (40), die zueinander komplementär und in dem genannten vorderen Ende (A) bzw. hinteren Ende (B) ausgebildet sind, aufweist, wobei der Fortsatz (30) aus einer der Kontaktflächen (20a oder 20b) herausragt und die Aussparung (40) aus einer der gegenüberliegenden Kontaktflächen (20b oder 20a) ausgespart ist, und bestehend aus dem genannten ferromagnetischen Material der erwähnten Magnetkerne, wodurch verhindert wird, dass die genannte Arretierungsanordnung in Querrichtung der miteinander verbundenen Magnetkerne (10, 11) fehlausgerichtet wird.

2. Magnetkernanordnung nach Anspruch 1, wobei jeder der genannten Magnetkerne eine rechteckige Prismenform besitzt und der genannte Fortsatz (30) und die genannte Aussparung (40) auf jeweils gegenüberliegenden, kleineren rechteckigen Flächen beider Enden (A, B) jedes Magnetkerns (10, 11) ausgebildet sind.

3. Magnetkernanordnung nach Anspruch 2, wobei sich der genannte Fortsatz (30) und die genannte Aussparung (40) in einer mittigen Position auf der Anordnung der an ihren Enden (A, B) miteinander verbundenen starren Magnetkerne (10, 11) befinden.

4. Magnetkernanordnung nach Anspruch 2, wobei sich der genannte Fortsatz (30) und die genannte Aussparung (40) in einer seitlichen Position auf der Anordnung der an ihren Enden (A, B) miteinander verbundenen starren Magnetkerne (10, 11) befinden.

5. Magnetkernanordnung nach Anspruch 2, wobei der genannte Fortsatz (30) und die genannte Aussparung (40) eine Breite von 10 % der größten Breite der rechteckigen Prismenform oder eine Breite von 60 % der größten Breite der rechteckigen Prismenform besitzen.

6. Flexibler langgestreckter Induktor mit einer Magnetkernanordnung nach einem der Ansprüche 1 bis 5, umschlossen von einem flexiblen Polymergehäuse (50).

7. Flexibler langgestreckter Induktor nach Anspruch 6, wobei das flexible Polymergehäuse (50) Mikrofasern, Mikropartikel und/oder Nanopartikel aus einem weichen ferromagnetischen Material enthält, die allein oder in einer beliebigen Kombination derselben in der Polymermatrix des genannten Polymergehäuses vorhanden sind und zusammenwirken, um magnetischen Streufluss in den Verbindungsbereichen oder Zwischenräumen zwischen den genannten mindestens zwei Magnetkernen (10, 11) zu verhindern.

8. Flexibler langgestreckter Induktor nach Anspruch 7, wobei die genannten Mikrofasern, Mikropartikel und/oder Nanopartikel des weichen ferromagnetischen Materials mindestens etwa 50 % des Gesamtgewichts des Kerns ausmachen.

9. Flexibler langgestreckter Induktor nach Anspruch 6 oder 7, wobei der flexible langgestreckte Induktor länger als 15 cm und vorzugsweise länger als 30 cm ist.

## Revendications

1. Un ensemble de noyaux magnétiques pour un inducteur allongé flexible, l'ensemble étant formé par au moins deux noyaux magnétiques rigides (10,11) fabriqués en un matériau ferromagnétique, connecté de façon articulée entre eux à leurs extrémités, en formant un ensemble oblong, où chacun des noyaux magnétiques (10,11) possède une coupe transversale rectangulaire vue dans le sens oblong et comprend :
- une extrémité avant, (A) pourvue d'une surface courbe convexe circulaire par rapport à un axe transversal (X) de la tête ; et
- une extrémité arrière (B) pourvue d'une surface courbe concave circulaire par rapport à un axe transversal (X) de l'arrière, parallèle à l'axe transversal (X) de l'avant, cette surface courbe concave circulaire étant une surface courbe concave circulaire complémentaire de cette surface courbe convexe circulaire,
où l'extrémité avant (A) d'un des noyaux magnétiques est couplée avec l'extrémité arrière (B) d'un adjacent des noyaux magnétiques à travers des surfaces de contact (20a, 20b) offertes par la surface courbe convexe circulaire et la surface courbe concave circulaire, en formant une fixation articulée autour de ces axes transversaux (X) de l'avant et l'arrière, qui coïncident dans la région de couplage, offrant un joint ayant un angle ajustable variable,
où l'ensemble de noyaux magnétiques de ces deux ou plusieurs noyaux magnétiques rigides (10,11) possède une bobine (51) fabriquée à partir d'un élément conducteur entourant ces noyaux et cette fixation articulée entre les noyaux magnétiques (10,11) comprennent au moins une configuration de rétention formée par une protubérance (30) et un évidement (40) complémentaires l'une de l'autre, définis dans cette extrémité avant (A) et extrémité arrière (B) respectivement ,la protubérance (30) dépassant une de surfaces de contact (20a ou 20b) et l'évidement (40) étant en retrait à partir d'une des surfaces de contact opposées (20b ou 20a), et formée à partir de ce matériau ferromagnétique de ces noyaux magnétiques, en évitant que cette configuration de rétention soit mal alignée dans le sens transversal des noyaux magnétiques (10,11) couplés entre eux.

2. L'ensemble de noyaux magnétiques conformément à la revendication 1, où chacun de ces noyaux magnétiques possède une configuration prismatique rectangulaire et ces protubérance (30) et évidemment (40) sont définis sur des faces rectangulaires plus petites opposées respectivement aux deux extrémités, (A, B) de chaque noyau magnétique (10,11).

3. L'ensemble de noyaux magnétiques conformément à la revendication 2, où cette protubérance (30) et cet évidement (40) adoptent une position centrale par rapport à l'ensemble de noyaux magnétiques rigides (10,11) couplés entre eux à leurs extrémités, (A, B).

4. L'ensemble de noyaux magnétiques conformément à la revendication 2, où cette protubérance (30) et cet évidement (40) adoptent une position latérale par rapport à l'ensemble de ces noyaux magnétiques rigides (10,11) couplés entre eux à leurs extrémités (A, B).

5. L'ensemble de noyaux magnétiques conformément à la revendication 2, où cette protubérance (30) et cet évidement (40) ont une largeur de 10% par rapport à la largeur plus grande de la configuration prismatique rectangulaire ou ont une largeur de 60% par rapport à la largeur la plus grande de la configuration prismatique rectangulaire.

6. Un inducteur allongé flexible comprenant un noyau magnétique ; ensemble conformément à une quelconque des revendications 1 à 5 entouré par un carter de polymère flexible (50).

7. L'inducteur allongé flexible conformément à la revendication 6 dans lequel le carter de polymère flexible (50) comprend des microfibres des microparticules et/ou des nanoparticules d'un matériau ferromagnétique souple présent seul ou dans une combinaison entre eux à l'intérieur de la matrice de polymère de ce carter de polymère qui fonctionne ensemble pour éviter la dispersion de flux magnétique dans les régions de couplage ou les interstices entre ces au moins deux noyaux magnétiques (10,11).

8. L'inducteur allongé flexible conformément à la revendication 7, où ces microfibres, microparticules et/ou nanoparticules de ce matériau ferromagnétique souple représente environ au moins des 50% du poids total du noyau.

9. L'inducteur allongé flexible conformément à la revendication 6 ou 7, où l'inducteur flexible allongé possède une longueur supérieure à 15 cm et de préférence supérieure à 30 cm.
